# EUROPÄISCHE PATENTSCHRIFT

(11) **EP 3 282 336 B1**
(45) Veröffentlichungstag und Bekanntmachung des Hinweises auf die Patenterteilung: **22.04.2020**
(21) Anmeldenummer: 17185324.5
(22) Anmeldetag: 08.08.2017
(51) Int. Cl.: B66F 9/06, G05D 1/02, B66F 9/075

(54) **FAHRERLOSE TRANSPORTVORRICHTUNG UND VERFAHREN ZUR NAVIGATION UND POSITIONIERUNG EINER FAHRERLOSEN TRANSPORTVORRICHTUNG**
DRIVERLESS TRANSPORT DEVICE AND METHOD FOR NAVIGATION AND POSITIONING OF A DRIVERLESS TRANSPORT DEVICE
DISPOSITIF DE TRANSPORT SANS CONDUCTEUR ET PROCÉDÉ DE NAVIGATION ET DE POSITIONNEMENT D'UN DISPOSITIF DE TRANSPORT SANS CONDUCTEUR

(30) Priorität: 12.08.2016 DE 102016115033
(43) Veröffentlichungstag der Anmeldung: 14.02.2018
(73) Patentinhaber: Universität Stuttgart, 70174 Stuttgart (DE)
(72) Erfinder: Grotz, Peter, 87616 Marktoberdorf (DE)
(74) Vertreter: DREISS Patentanwälte PartG mbB

(56) Entgegenhaltungen:
- EP-A1- 3 000 771
- EP-A2- 1 834 922
- DE-T2- 68 905 290

## Beschreibung

Die Erfindung betrifft eine fahrerlose Transportvorrichtung zum autonomen Transport von Objekten in der Fertigung, Montage und/oder Logistik, mit den Merkmalen des Oberbegriffs von Anspruch 1. Zudem betrifft die Erfindung ein Verfahren zur Navigation und Positionierung einer fahrerlosen Transportvorrichtung in der Fertigung, Montage und/oder Logistik, mit den Merkmalen des Oberbegriffs des nebengeordneten Anspruchs.

Aus dem Stand der Technik sind fahrerlose Transportvorrichtungen bekannt. Diese werden in der automatisierten Fertigung zum autonomen Transport von Objekten eingesetzt und liefern diese beispielsweise an Fertigungsstationen oder Fertigungslinien. Dabei verfügen fahrerlose Transportvorrichtungen über Spurführungssensoren zur Spurführung entlang von Spurlinien am Boden sowie über weitere Sensoren, um die fahrerlose Transportvorrichtung beispielsweise an einer Belade- oder Entladeposition bezüglich einer Lastaufnahmeeinheit auszurichten. Eine solche Ausrichtung ist erforderlich, da die Lastaufnahmeeinheit nicht stets an der gleichen Position angeordnet ist.

Bei bekannten fahrerlosen Transportvorrichtungen ist nachteilig, dass diese auf Grund der zu bewerkstelligenden Positionierungs- und Ausrichtungsaufgaben eine aufwändige und daher kostenintensive Messtechnik aufweisen. EP 1 834 922 A2 zeigt einen personengeführten Gabelstapler mit Merkmalen des Oberbegriffs von Anspruch 1. Der Gabelstapler weist einen schwenkbaren 3D-Sensor auf, mit dem durch Messung der Lichtlaufzeit Hubhöhe oder Neigung der Gabel bestimmt und Hindernisse erkannt werden können. EP 3 000 771 A1 offenbart ebenfalls einen Gabelstapler mit beweglichem 3D-Sensor, bei dem durch Lichtlaufzeitverfahren bei Lastaufnahme oder Lastabgabe eine teilautomatisierte Positionierung der Gabel erfolgen kann. DE 689 05 290 T2 zeigt ein Verfahren zur Messung der Positionsentwicklung mit einer fest ausgerichteten Kamera.

Der Erfindung liegt die Aufgabe zugrunde, mit einfachen konstruktiven Mitteln eine zuverlässige Ausrichtung und Positionierung von fahrerlosen Transportvorrichtungen zu ermöglichen. Kostengünstige Lösungen sind wünschenswert. Die Erfindung löst die Aufgabe mit den Merkmalen des Anspruchs 1, bzw. 7.

Die fahrerlose Transportvorrichtung weist also einen Sensor auf, der zwei unterschiedliche Aufgaben erfüllt, nämlich eine Navigation oder Spurführung des fahrerlosen Transportfahrzeugs gegenüber einer mit Ortsmarkierungen versehenen Bezugsfläche einerseits und eine Feinpositionierung des Transportfahrzeugs gegenüber einer Ladungseinheit oder einer Bearbeitungsstation andererseits. Hierzu ist lediglich ein Sensor erforderlich, da eine Vereinigung von Navigation und Feinpositionierung stattfindet. Ein kombiniertes Navigations- und Feinpositionierungssystem ist geschaffen.

Der Sensor ist insbesondere mechanisch mit der Transportvorrichtung gekoppelt und bezüglich der Transportvorrichtung verlagerbar. Dabei ist der Sensor in der ersten Stellung mit seinem Lese- oder Sichtbereich den Ortsmarkierungen auf der Bezugsfläche zugewandt. In der zweiten Stellung ist der Sensor mit seinem Lese- oder Sichtbereich auf die Ladungseinheit/Ladungseinheitabschnitt oder eine Bearbeitungsstation/Bearbeitungsstationsabschnitt ausgerichtet, wobei anhand der erfassten Informationen eine Feinpositionierung oder Tracking der Transportvorrichtung erfolgt, und zwar bis auf wenige Millimeter genau, beispielsweise weniger als 5 Millimeter genau. Durch die reduzierte Sensoranzahl ist ein konstruktiv einfacher und platzsparender Aufbau geschaffen. Durch Einsparung von Sensoren und Schnittstellen ist eine kostengünstige Ausführung erreicht.

Unter dem Begriff "Feinpositionierung" wird eine genaue Ausrichtung der Transportvorrichtung bezüglich einer Ladungseinheit oder einer Bearbeitungsstation verstanden, und zwar hinsichtlich Position und Orientierung.

Bei der Bezugsfläche, auf der Ortsmarkierungen angebracht sind, kann es sich um einen Untergrund, eine Wand oder eine Decke handeln. Die Ortsmarkierungen können in ihrer Gesamtheit eine Spurmarkierung bilden.

Bei der fahrerlosen Transportvorrichtung handelt es sich erfindungsgemäß um ein fahrerloses Transportfahrzeug. Bei dem durch die fahrerlose Transportvorrichtung zu transportierenden Objekt kann es sich um Gegenstände, beispielsweise Halbzeuge, Werkstücke oder sonstige Stückgüter, oder um ein an der fahrerlosen Transportvorrichtung befestigtes Werkzeug, eine befestigte Maschine oder einen befestigten Roboter handeln.

Durch die Ausrichtung ist ein zuverlässiges Beladen oder Entladen der Transportvorrichtung mit einer Ladungseinheit möglich. Ebenso ist ein zuverlässiges Ankoppeln einer (fahrbaren) Ladungseinheit an die Transportvorrichtung ermöglicht.

An einer Bearbeitungsstation lässt sich ebenso ein Bearbeitungsschritt durchführen, beispielsweise durch ein auf der Transportvorrichtung angeordnetes Werkzeug oder einen Roboter.

Bei der Ladungseinheit kann es sich um einen einzelnen Ladungsträger handeln, beispielsweise in Form einer Palette, Gitterbox, Box, Schachtel oder in Form eines individuellen Werkstück- oder Halbzeughalters. Bei der Ladungseinheit kann es sich auch um eine weitere fahrerlose Transportvorrichtung handeln, die ein zu bearbeitendes Objekt trägt und durch die (erste) Transportvorrichtung zur Durchführung eines Bearbeitungsschrittes angefahren wird.

Die Ladungseinheit kann auch als Ladehilfsmittel in Form eines vorzugsweise fahrbaren Regals oder Magazins ausgebildet sein, das mehrere Ladungsträger aufnimmt. Die Ladungseinheit kann auf die fahrerlose Transportvorrichtung aufgesetzt und an eine Belade- oder Entladeposition verbracht werden. Ebenfalls denkbar ist, dass die Ladungseinheit mittels einer Kupplung an die fahrerlose Transportvorrichtung angekoppelt wird, beispielsweise durch Ausrichtung von Kupplungselementen und/oder stromführenden Elementen zum Lösen einer Bremse der Ladungseinheit mittels der Sensoreinheit.

Die fahrerlose Transportvorrichtung gemäß der Erfindung kommt in der automatisierten Fertigung oder Montage, insbesondere in der Produktionslogistik der Automobilindustrie zum Einsatz.

Bei fahrerlosen Transportvorrichtungen mit komplizierten Positionierungsaufgaben ist auch ein Einsatz mehrerer Sensoreinheiten entsprechend der voranstehend beschriebenen Art an einer Transportvorrichtung denkbar.

Bei der ersten Stellung und der zweiten Stellung des Sensors handelt es sich um zwei Leselagen des Sensors.

In vorteilhafter Weise kann die Sensoreinheit eine um eine Schwenkachse verschwenkbare Aufnahme, insbesondere einen Schenkel, aufweisen, an oder auf der der Sensor angeordnet ist. Damit ist die Verlagerung des Sensors als Schwenkbewegung ausgebildet, so dass der Sensor nebst Aufnahme verschwenkbar ist. Mit anderen Worten ist eine mechanisch dreh- oder schwenkbare Sensoreinheit geschaffen. Dabei kann der Sensor zwischen der ersten Stellung und der zweiten Stellung beispielsweise um einen Winkel von 180° oder um einen Winkel von 90° verschwenkt werden. Durch den verschwenkbaren Schenkel ist eine konstruktiv einfache und zugleich stabile Ausführung der Sensorverlagerung realisiert. Dabei ist die Länge des Schenkels und/oder die Sensorposition am Schenkel derart bemessen, dass sowohl eine Navigation gegenüber Ortsmarkierungen auf der Bezugsfläche als auch eine Feinpositionierung gegenüber einer Ladungseinheit oder einer Bearbeitungsstation ermöglicht ist. Ebenfalls denkbar ist, dass die Schwenkachse derart angeordnet ist, dass der Sensor rotiert wird.

Im Konkreten kann die Sensoreinheit derart eingerichtet sein, dass der Sensor zwischen der ersten Stellung und der zweiten Stellung um einen Winkel von 0 bis 360°, vorzugsweise von 0 bis 180°, weiter vorzugweise von 45° bis 150°, noch weiter vorzugsweise von 60° bis 120°, verschwenkbar ist. Unabhängig davon kann die Sensoreinheit derart eingerichtet sein, dass eine erste Stellung und mehrere zweite Stellungen vorgesehen sind. So können insgesamt mehr als zwei Stellungen des Sensors (Leselagen) realisiert werden, bspw. drei, vier, sechs, acht oder zwölf Stellungen. Die Stellungen können vorzugsweise durch gleich große Winkel voneinander abgestuft sein, bspw. durch einen Winkel von jeweils 120°, von 90°, von 60°, von 45° oder von 30°.

Im Rahmen einer bevorzugten Ausgestaltung kann die Aufnahme an einem Befestigungselement zur Befestigung an der fahrerlosen Transportvorrichtung gelagert sein. Damit ist eine konstruktiv einfache und stabile Anbindungsmöglichkeit der Sensoreinheit an der Transportvorrichtung geschaffen, wobei die Sensoreinheit vormontiert werden kann. Auch eine Nachrüstung bestehender Transportvorrichtungen ist somit auf einfache Weise ermöglicht. Das Befestigungselement kann als Halteplatte, Haltewinkel oder Halteblech ausgebildet sein.

In vorteilhafter Weise kann an der Transportvorrichtung eine Kulissenführung oder Linearführung angeordnet sein, an der die Sensoreinheit oder der Sensor geführt ist. Dabei kann die Kulissenführung derart ausgebildet sein, dass der Sensor durch Führung entlang der Kulisse zwischen der ersten Stellung und der zweiten Stellung verlagerbar, insbesondere verschwenkbar ist. Auch hiermit kann der Sensor in mindestens zwei Leselagen verbracht werden. Die Kulissenführung oder Linearführung kann in Form eines Kreisbogens ausgebildet sein, so dass die Sensoreinheit oder der Sensor durch Verfahren entlang der Kulissenführung oder Linearführung verschwenkt wird.

Zweckmäßigerweise kann der Antrieb als Stellantrieb ausgebildet sein. Hiermit ist eine kostengünstige und zuverlässige Verlagerung des Sensors ermöglicht. Damit die Schwenkbewegung des Sensors möglichst nicht beeinträchtigt wird, kann der Stellantrieb an der vom Sensor abgewandten Seite des Befestigungselements angeordnet sein. Der Stellantrieb kann als elektrischer Antrieb, beispielsweise als Drehmotor, Linearmotor oder als Hubmagnet ausgebildet sein. Alternativ hierzu kann der Stellantrieb als pneumatischer Antrieb, beispielsweise als Pneumatikzylinder oder pneumatischer Schwenk- oder Drehmotor, oder als hydraulischer Antrieb, zum Beispiel als Hydraulikzylinder oder hydraulischer Schwenk- oder Drehmotor, realisiert sein.

In vorteilhafter Weise kann die Schwenkachse bezogen auf die Aufnahme und/oder den Sensor exzentrisch angeordnet sein. Damit kann der Sensor nicht nur rotiert, sondern orthogonal zur Schwenkachse verlagert werden. Dies kann zur Anpassung an den Erfassungsbereich des Sensors verwendet werden, damit der Sensor sowohl Ortsmarkierungen auf der Bezugsfläche als auch den Ladungsträger oder die Bearbeitungsstation zuverlässig erfassen kann.

Weiter erfindungsgemäß ist der Sensor als optischer Sensor ausgebildet. Mit einem optischen Sensor ist eine einfache und kostengünstige Lösung erreicht, da dieser anhand Ortsmarkierungen in Form von aufgebrachten kontrastierten Punkten oder Spuren eine Navigation vornehmen kann. Als optischer Sensor wird erfindungsgemäß eine Kamera eingesetzt. Alternativ oder ergänzend zu einfachen Ortsmarkierungen können Barcodes oder 2D-Codes eingesetzt werden, womit neben einer Spurführung oder Navigation in Form eines Fahrbefehls auch weitere Informationen übertragen werden können. Mit einem Hallsensor können Ortsmarkierungen in Form von Magneten eingesetzt werden. Mit einer RFID-Leseeinrichtung oder einem RFID-Lesekopf ist ebenfalls eine Erfassung von Ortsmarkierungen möglich, wobei die Ortsmarkierungen als RFID-Tags ausgebildet sein können. Auch hiermit sind Fahrbefehle und weitere Informationen übertragbar. Die Ortsmarkierungen können auf dem Untergrund, an einer Wand oder an einer Decke und vorzugsweise auch auf oder an der Ladungseinheit oder der Bearbeitungsstation zur Feinpositionierung der fahrerlosen Transportvorrichtung angebracht sein.

Die eingangs genannte Aufgabe wird auch durch ein Verfahren mit den Merkmalen des nebengeordneten Anspruchs gelöst. Danach zeichnet sich das Verfahren dadurch aus, dass sich der Sensor während des Anfahrens eines Bestimmungsorts, insbesondere einer Belade- oder Entladeposition oder einer Bearbeitungsstation, in einer ersten Stellung befindet und zur Navigation mittels Ortsmarkierungen auf einer Bezugsfläche dient und dass bei oder nach Erreichen des Bestimmungsorts der Sensor von der ersten Stellung in mindestens eine zweite Stellung verlagert wird und zur Positionierung der Transportvorrichtung gegenüber einer Ladungseinheit oder einer Bearbeitungsstation dient. Insbesondere wird der Sensor von der ersten Stellung in die zweite Stellung um einen Winkel von bis zu 360°, vorzugsweise um bis zu 180°, verschwenkt.

Damit werden mit lediglich einem Sensor zwei Messaufgaben übernommen, nämlich eine Navigation oder Spurführung der Transportvorrichtung gegenüber einer Bezugsfläche, beispielsweise dem Untergrund, einer Wand oder einer Decke einerseits und eine Positionierung der Transportvorrichtung bezogen auf eine Ladungseinheit oder eine Bearbeitungsstation andererseits. Hinsichtlich der dadurch erzielbaren Vorteile wird auf die diesbezüglichen Ausführungen zum Anspruch 1 verwiesen.

Im Rahmen einer bevorzugten Ausgestaltung kann der Sensor bei oder nach Erreichen des Bestimmungsorts von der ersten Stellung in die zweite Stellung verfahren oder verschwenkt werden. Damit ist bei platzsparender Bauweise ein schnelles Umschalten zwischen der ersten Stellung und der zweiten Stellung ermöglicht.

Im Konkreten können eine erste Stellung und mehrere zweite Stellungen vorgesehen sein. So können insgesamt mehr als zwei Stellungen des Sensors (Leselagen) realisiert werden, wie in den Ansprüchen angegeben. Die Stellungen können vorzugsweise durch gleich große Winkel voneinander abgestuft sein.

In vorteilhafter Weise kann der Sensor nach einem Belade- oder Entladevorgang, insbesondere an der Belade- oder Entladeposition, oder einem Bearbeitungsschritt, insbesondere an der Bearbeitungsstation, von der oder einer der zweiten Stellungen in die erste Stellung verlagert werden und erneut zur Navigation der Transportvorrichtung dienen, beispielsweise mittels Ortsmarkierungen auf einer Bezugsfläche. Damit ist eine durchgehende Navigation des fahrerlosen Transportfahrzeugs mit lediglich einem Sensor ermöglicht, da die Transportvorrichtung zu einer Belade- oder Entladeposition oder einer Bearbeitungsstation verfahren, dort durch den in der zweiten Stellung befindlichen Sensor ausgerichtet und nach einem Verlagern des Sensors in die erste Stellung durch Navigation anhand von Ortsmarkierungen auf dem Untergrund, an der Wand oder an einer Decke geführt werden kann.

Zur weiteren Ausgestaltung des Verfahrens können die im Zusammenhang mit der Transportvorrichtung beschriebenen Maßnahmen dienen.

Die Erfindung wird im Folgenden anhand der Figuren näher erläutert. Es zeigen:
- Fig.1: in einer schematischen perspektivischen Ansicht die Sensoreinheit der fahrerlosen Transportvorrichtung;
- Fig.2: in einer schematischen Seitenansicht die Sensoreinheit der fahrerlosen Transportvorrichtung mit Sensor in einer ersten Stellung; und
- Fig.3: in einer schematischen Seitenansicht die Sensoreinheit der fahrerlosen Transportvorrichtung mit Sensor in einer zweiten Stellung.

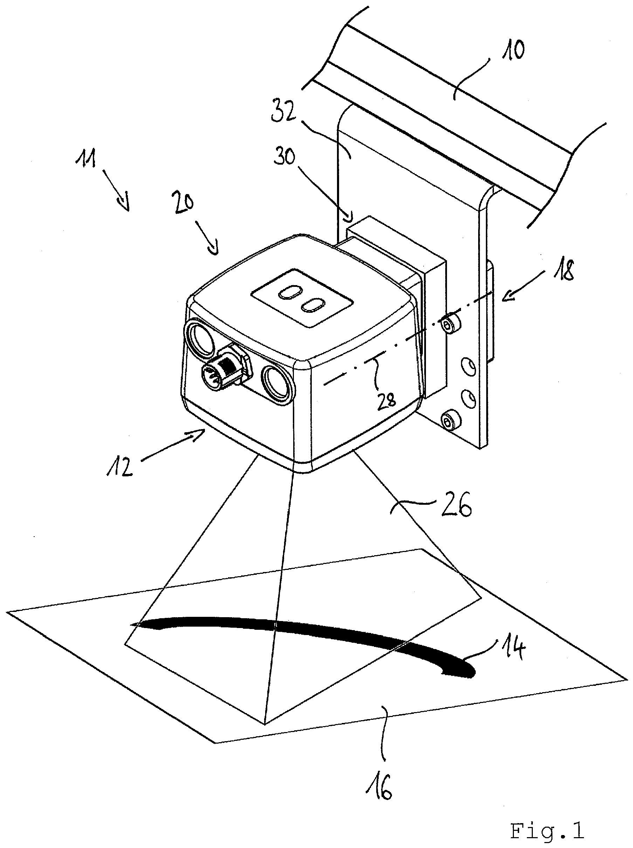

Fig.1 zeigt eine Sensoreinheit 11 einer fahrerlosen Transportvorrichtung 10 (nur ansatzweise dargestellt) zum autonomen Transport von Objekten in der Fertigung, Montage und/oder Logistik. Die Sensoreinheit 11 weist einen Sensor 12 zur Erfassung von Ortsmarkierungen 14 auf einer Bezugsfläche 16, im Ausführungsbeispiel auf dem Untergrund, auf. Der Sensor 12 ist im vorliegenden Ausführungsbeispiel als optischer Sensor ausgebildet.

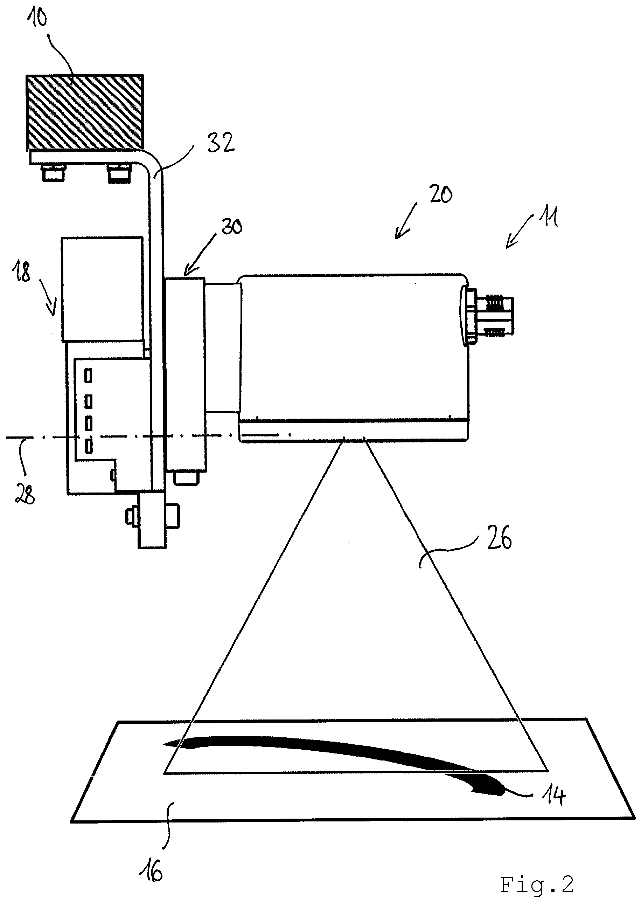

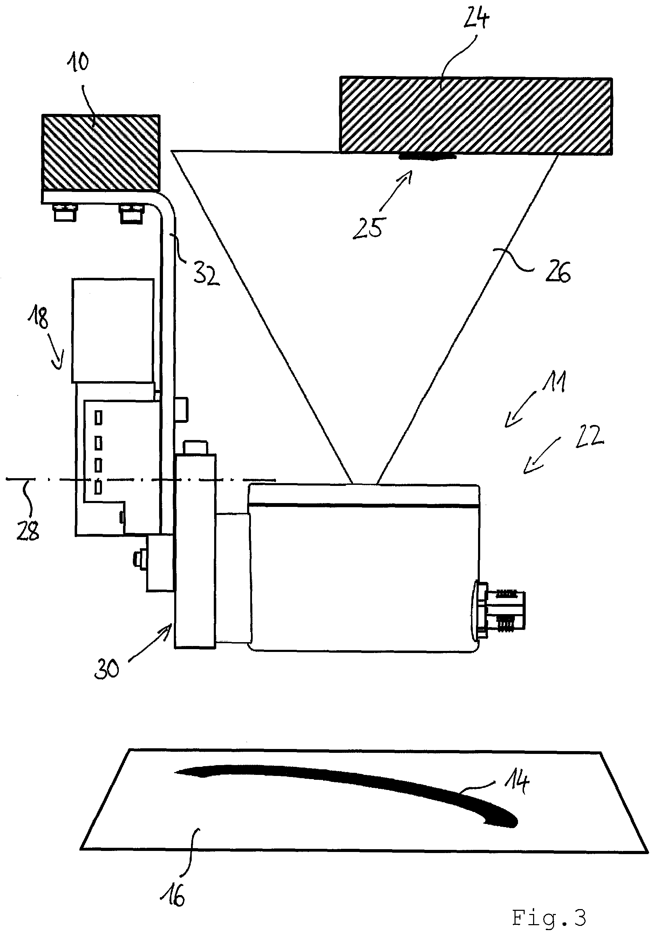

Der Sensor 12 ist durch einen Antrieb 18 zwischen einer ersten Stellung 20 (siehe Figur 1 und 2) und einer zweiten Stellung 22 (siehe Figur 3) verlagerbar, und zwar verschwenkbar. Der Sensor 12 dient in der ersten Stellung 20 zur Navigation oder Spurführung der fahrerlosen Transportvorrichtung 10 gegenüber Ortsmarkierungen 14 auf dem als Bezugsfläche 16 dienenden Untergrund. Der Erfassungs- oder Lesebereich 26 des Sensors 12 ist dabei zur Bezugsfläche 16, nämlich zum Untergrund hin orientiert. In der zweiten Stellung 22 (siehe Figur 3) dient der Sensor 12 zur Positionierung der Transportvorrichtung 10 gegenüber einer Ladungseinheit 24 (nur ansatzweise dargestellt). Der Erfassungs- oder Lesebereich 26 des Sensors 12 ist dabei zur Ladungseinheit 24 hin orientiert. An der Ladungseinheit 24 sind eine oder mehrere Positioniermarkierungen 25 zur Feinpositionierung der Transportvorrichtung 10 gegenüber der Ladungseinheit 24 angebracht.

Die Sensoreinheit 11 weist eine um eine Schwenkachse 28 verschwenkbare Aufnahme 30, hier als Schenkel 30 ausgeführt, auf, an oder auf der der Sensor 12 angeordnet ist. Mit anderen Worten kann die Sensoreinheit 11 als mechanisch dreh- oder schwenkbare Sensoreinheit bezeichnet werden. Im vorliegenden Ausführungsbeispiel sind eine erste Stellung 20 und eine zweite Stellung 22 vorgesehen (insgesamt zwei Stellungen bzw. Leselagen des Sensors 12), wobei der Sensor 12 zwischen der ersten Stellung 20 und der zweiten Stellung 22 um einen Winkel von 180° verschwenkt wird. Wie oben bereits ausgeführt, sind mehr als insgesamt zwei Stellungen und auch andere Schwenkwinkel des Sensors denkbar.

Der Schenkel 30 ist an einem Befestigungselement 32 in Form einer Halteplatte oder eines Haltewinkels zur Befestigung an der fahrerlosen Transportvorrichtung 10 gelagert.

Der Antrieb 18, der den Sensor 12 verlagert oder insbesondere verschwenkt, ist als Stellantrieb ausgebildet.

Die Schwenkachse 28 ist im Ausführungsbeispiel bezogen auf den Schenkel 30 und/oder den Sensor 12 exzentrisch angeordnet.

Das Verfahren zur Navigation und Positionierung der fahrerlosen Transportvorrichtung 10, hier am Beispiel einer Fertigung veranschaulicht, arbeitet folgendermaßen:
Die Transportvorrichtung 10 weist, wie voranstehend erläutert, eine Sensoreinheit 11 mit einem Sensor in Form eines optischen Sensors 12 auf.

Der Sensor 12 befindet sich während des Anfahrens eines Bestimmungsorts oder Zielorts, beispielsweise einer Belade- oder Entladeposition, in einer ersten Stellung 20 und dient zur Navigation mittels Ortsmarkierungen 14 auf einem als Bezugsfläche 16 dienenden Untergrund. Der Erfassungs- oder Lesebereich 26 des Sensors 12 ist dabei zum Untergrund hin orientiert.

Bei oder nach Erreichen des Bestimmungsorts, beispielsweise der Belade- oder Entladeposition, wird der Sensor 12 von der ersten Stellung 20 in die zweite Stellung 22 verlagert und dient zur Positionierung der Transportvorrichtung 10 gegenüber der Ladungseinheit 24. Der Erfassungs- oder Lesebereich 26 des Sensors 12 ist dabei zur Ladungseinheit 24 hin orientiert.

Dabei wird der Sensor 12 bei oder nach Erreichen des Bestimmungsorts, beispielsweise der Belade- oder Entladeposition, von der ersten Stellung 20 in die zweite Stellung 22 verschwenkt, im Ausführungsbeispiel um einen Winkel von 180°.

Der Sensor 12 wird nach einem Belade- oder Entladevorgang, insbesondere an der Belade- oder Entladeposition, von der zweiten Stellung 22 in die erste Stellung 20 verlagert und dient erneut zur Navigation der Transportvorrichtung 10, beispielsweise mittels Ortsmarkierungen 14 auf einem als Bezugsfläche 16 dienenden Untergrund.

## Patentansprüche

1. Transportvorrichtung (10) mit einer Sensoreinheit (11), wobei die Sensoreinheit (11) einen optischen Sensor (12) aufweist, wobei der Sensor (12) durch einen Antrieb (18) zwischen mindestens einer ersten Stellung (20) und mindestens einer zweiten Stellung (22) verlagerbar ist, wobei die Sensoreinheit (11) derart eingerichtet ist, dass der Sensor (12) von der ersten Stellung (20) in die zweite Stellung (22) um einen Winkel von bis zu 360° verschwenkbar ist, **dadurch gekennzeichnet, dass** die Sensoreinheit (11) zur Navigation und Positionierung der Transportvorrichtung (10) dient, wobei der optische Sensor (12) als Kamera zur Erfassung von Ortsmarkierungen (14) in Form von kontrastierten Punkten oder Spuren auf einer Bezugsfläche (16) ausgebildet ist und in der ersten Stellung (20) zur Navigation der fahrerlosen Transportvorrichtung (10) gegenüber den Ortsmarkierungen (14) auf der Bezugsfläche (16) und in der zweiten Stellung (22) zur Positionierung der Transportvorrichtung (10) gegenüber einer Ladungseinheit (24) oder einer Bearbeitungsstation dient, und dass die Transportvorrichtung (10) als fahrerloses Transportfahrzeug zum autonomen Transport von Objekten in der Fertigung, Montage und/oder Logistik ausgebildet ist.

2. Transportvorrichtung (10) nach Anspruch 1, **dadurch gekennzeichnet, dass** die Sensoreinheit (11) eine um eine Schwenkachse (28) verschwenkbare Aufnahme (30) aufweist, an oder auf der der Sensor (12) angeordnet ist.

3. Transportvorrichtung (10) nach Anspruch 2, **dadurch gekennzeichnet, dass** die Aufnahme (30) an einem Befestigungselement (32) zur Befestigung an der fahrerlosen Transportvorrichtung (10) gelagert ist.

4. Transportvorrichtung (10) nach Anspruch 1, **dadurch gekennzeichnet, dass** an der Transportvorrichtung (10) eine Kulissenführung angeordnet ist, an der die Sensoreinheit (11) oder der Sensor (12) geführt ist.

5. Transportvorrichtung (10) nach einem der voranstehenden Ansprüche, **dadurch gekennzeichnet, dass** der Antrieb (18) als Stellantrieb ausgebildet ist.

6. Transportvorrichtung (10) nach einem der voranstehenden Ansprüche, **dadurch gekennzeichnet, dass** die Schwenkachse (28) bezogen auf die Aufnahme (30) und/oder den Sensor (12) exzentrisch angeordnet ist.

7. Verfahren zur Navigation und Positionierung einer Transportvorrichtung (10) in der Fertigung, Montage und/oder Logistik, mit einer Sensoreinheit (11), **dadurch gekennzeichnet, dass** die Transportvorrichtung (10) als fahrerloses Transportfahrzeug ausgebildet ist, dass die Sensoreinheit (11) einen als Kamera ausgebildeten optischen Sensor (12) zur Erfassung von Ortsmarkierungen (14) in Form von kontrastierten Punkten oder Spuren auf einer Bezugsfläche (16) aufweist, dass sich der Sensor (12) während des Anfahrens eines Bestimmungsorts in einer ersten Stellung (20) befindet und zur Navigation mittels Ortsmarkierungen (14) auf der Bezugsfläche (16) dient und dass bei oder nach Erreichen des Bestimmungsorts der Sensor (12) in mindestens eine zweite Stellung (22) verlagert wird und zur Positionierung der Transportvorrichtung (10) gegenüber einer Ladungseinheit (24) oder einer Bearbeitungsstation dient, wobei der Sensor (12) von der ersten Stellung (20) in die zweite Stellung (22) um einen Winkel von bis zu 360° verschwenkt wird.

8. Verfahren nach Anspruch 7, **dadurch gekennzeichnet, dass** der Sensor (12) bei oder nach Erreichen des Bestimmungsorts von der ersten Stellung (20) in die zweite Stellung (22) verschwenkt wird.

9. Verfahren nach Anspruch 7 oder 8, **dadurch gekennzeichnet, dass** drei Stellungen (20, 22) vorgesehen sind, die jeweils um einen Winkel von 120° voneinander abgestuft sind.

10. Verfahren nach Anspruch 7 oder 8, **dadurch gekennzeichnet, dass** vier Stellungen (20, 22) vorgesehen sind, die jeweils um einen Winkel von 90° voneinander abgestuft sind.

11. Verfahren nach Anspruch 7 oder 8, **dadurch gekennzeichnet, dass** sechs Stellungen (20, 22) vorgesehen sind, die jeweils um einen Winkel von 60° voneinander abgestuft sind.

12. Verfahren nach Anspruch 7 oder 8, **dadurch gekennzeichnet, dass** acht Stellungen (20, 22) vorgesehen sind, die jeweils um einen Winkel von 45° voneinander abgestuft sind.

13. Verfahren nach Anspruch 7 oder 8, **dadurch gekennzeichnet, dass** zwölf Stellungen (20, 22) vorgesehen sind, die jeweils um einen Winkel von 30° voneinander abgestuft sind.

14. Verfahren nach einem der Ansprüche 7 bis 13, **dadurch gekennzeichnet, dass** der Sensor (12) nach einem Belade- oder Entladevorgang oder einem Bearbeitungsschritt von der zweiten Stellung (22) in die erste Stellung (20) verlagert wird und erneut zur Navigation der Transportvorrichtung (10) dient.

## Claims

1. Transport device (10) comprising a sensor unit (11), the sensor unit (11) having an optical sensor (12), the sensor (12) being shiftable between at least one first position (20) and at least one second position (22) by means of a drive (18), the sensor unit (11) being configured such that the sensor (12) can be pivoted by an angle of up to 360° from the first position (20) into the second position (22), **characterized in that** the sensor unit (11) is used for navigating and positioning the transport device (10), the optical sensor (12) being designed as a camera for detecting location markings (14) in the form of contrasted points or tracks on a reference surface (16) and, in the first position (20), for navigating the driverless transport device (10) relative to the location markings (14) on the reference surface (16) and, in the second position (22), for positioning the transport device (10) relative to a loading unit (24) or a processing station, and **in that** the transport device (10) is designed as a driverless transport vehicle for autonomously transporting objects in manufacturing, assembly and/or logistics.

2. Transport device (10) according to claim 1, **characterized in that** the sensor unit (11) has a receptacle (30) which is pivotable about a pivot axis (28), and at or on which the sensor (12) is arranged.

3. Transport device (10) according to claim 2, **characterized in that** the receptacle (30) is mounted on a fastening element (32) for fastening to the driverless transport device (10).

4. Transport device (10) according to claim 1, **characterized in that** a slotted guide system is arranged on the transport device (10), on which slotted guide system the sensor unit (11) or the sensor (12) is guided.

5. Transport device (10) according to any of the preceding claims, **characterized in that** the drive (18) is designed as an actuator.

6. Transport device (10) according to any of the preceding claims, **characterized in that** the pivot axis (28) is arranged eccentrically with respect to the receptacle (30) and/or the sensor (12).

7. Method for navigating and positioning a transport device (10) in manufacturing, assembly and/or logistics, said transport device comprising a sensor unit (11), **characterized in that** the transport device (10) is designed as a driverless transport vehicle, **in that** the sensor unit (11) has an optical sensor (12) designed as a camera for detecting location markings (14) in the form of contrasted points or tracks on a reference surface (16), **in that** the sensor (12) is in a first position (20) when approaching a destination and is used for navigation by means of location markings (14) on the reference surface (16), and **in that**, upon or after reaching the destination, the sensor (12) is shifted into at least one second position (22) and is used for positioning the transport device (10) relative to a loading unit (24) or a processing station, the sensor (12) being pivoted by an angle of up to 360° from the first position (20) into the second position (22).

8. Method according to claim 7, **characterized in that**, upon or after reaching the destination, the sensor (12) is pivoted from the first position (20) into the second position (22).

9. Method according to claim 7 or claim 8, **characterized in that** three positions (20, 22) are provided which are each graduated from one another by an angle of 120°.

10. Method according to claim 7 or claim 8, **characterized in that** four positions (20, 22) are provided which are each graduated from one another by an angle of 90°.

11. Method according to claim 7 or claim 8, **characterized in that** six positions (20, 22) are provided which are each graduated from one another by an angle of 60°.

12. Method according to claim 7 or claim 8, **characterized in that** eight positions (20, 22) are provided which are each graduated from one another by an angle of 45°.

13. Method according to claim 7 or 8, **characterized in that** twelve positions (20, 22) are provided which are each graduated from one another by an angle of 30°.

14. Method according to any of claims 7 to 13, **characterized in that** the sensor (12) is shifted from the second position (22) into the first position (20) after a loading or unloading process or a processing step and is used again for navigating the transport device (10).

## Revendications

1. Dispositif de transport (10) avec une unité de détection (11), dans lequel l'unité de détection (11) présente un capteur optique (12), dans lequel le capteur (12) peut être déplacé par un entraînement (18) entre au moins une première position (20) et au moins une deuxième position (22), dans lequel l'unité de détection (11) est conçue de telle sorte que le capteur (12) peut pivoter de la première position (20) dans la deuxième position (22) d'un angle allant jusqu'à 360°, **caractérisé en ce que** l'unité de détection (11) sert à la navigation et au positionnement du dispositif de transport (10), dans lequel le capteur optique (12) est réalisé sous la forme d'une caméra destinée à détecter des repères (14) sous forme de points ou traces contrasté(e)s sur une surface de référence (16) et, dans la première position (20), sert à la navigation du dispositif de transport (10) sans conducteur par rapport aux repères (14) sur la surface de référence (16), et, dans la deuxième position (22), au positionnement du dispositif de transport (10) par rapport à une unité de chargement (24) ou une station de traitement, et que le dispositif de transport (10) est réalisé sous la forme d'un véhicule de transport sans conducteur pour le transport autonome d'objets en fabrication, montage et/ou logistique.

2. Dispositif de transport (10) selon la revendication 1, **caractérisé en ce que** l'unité de détection (11) présente un logement (30), pouvant pivoter autour d'un axe de pivotement (28), contre ou sur lequel le capteur (12) est disposé.

3. Dispositif de transport (10) selon la revendication 2, **caractérisé en ce que** le logement (30) est monté sur un élément de fixation (32) pour la fixation sur le dispositif de transport (10) sans conducteur.

4. Dispositif de transport (10) selon la revendication 1, **caractérisé en ce qu'**un guide à coulisse, sur lequel l'unité de détection (11) ou le capteur (12) est guidé(e), est disposé sur le dispositif de transport (10) .

5. Dispositif de transport (10) selon l'une quelconque des revendications précédentes, **caractérisé en ce que** l'entraînement (18) est réalisé sous la forme d'un entraînement de commande.

6. Dispositif de transport (10) selon l'une quelconque des revendications précédentes, **caractérisé en ce que** l'axe de pivotement (28) est disposé de manière excentrée par rapport au logement (30) et/ou au capteur (12).

7. Procédé pour la navigation et le positionnement d'un dispositif de transport (10) en fabrication, montage et/ou logistique, avec une unité de détection (11), **caractérisé en ce que** le dispositif de transport (10) est réalisé sous la forme d'un véhicule de transport sans conducteur, que l'unité de détection (11) présente un capteur optique (12) réalisé sous la forme d'une caméra, destiné à détecter des repères (14) sous forme de points ou traces contrasté(e)s sur une surface de référence (16), que le capteur (12) se trouve dans une première position (20) pendant l'atteinte d'une destination et sert à la navigation au moyen de repères (14) sur la surface de référence (16) et que, lors de ou après l'atteinte de la destination, le capteur (12) est déplacé dans au moins une deuxième position (22) et sert au positionnement du dispositif de transport (10) par rapport à une unité de chargement (24) ou à une station de traitement, dans lequel le capteur (12) est amené à pivoter de la première position (20) dans la deuxième position (22) d'un angle allant jusqu'à 360°.

8. Procédé selon la revendication 7, **caractérisé en ce que** le capteur (12), lors de ou après l'atteinte de la destination, est amené à pivoter de la première position (20) dans la deuxième position (22).

9. Procédé selon la revendication 7 ou 8, **caractérisé en ce que** trois positions (20, 22) sont prévues, qui sont échelonnées les unes par rapport aux autres respectivement d'un angle de 120°.

10. Procédé selon la revendication 7 ou 8, **caractérisé en ce que** quatre positions (20, 22) sont prévues, qui sont échelonnées les unes par rapport aux autres respectivement d'un angle de 90°.

11. Procédé selon la revendication 7 ou 8, **caractérisé en ce que** six positions (20, 22) sont prévues, qui sont échelonnées les unes par rapport aux autres respectivement d'un angle de 60°.

12. Procédé selon la revendication 7 ou 8, **caractérisé en ce que** huit positions (20, 22) sont prévues, qui sont échelonnées les unes par rapport aux autres respectivement d'un angle de 45°.

13. Procédé selon la revendication 7 ou 8, **caractérisé en ce que** douze positions (20, 22) sont prévues, qui sont échelonnées les unes par rapport aux autres respectivement d'un angle de 30°.

14. Procédé selon l'une quelconque des revendications 7 à 13, **caractérisé en ce que** le capteur (12) est déplacé après un processus de chargement ou de déchargement ou une étape de traitement de la deuxième position (22) dans la première position (20) et sert de nouveau à la navigation du dispositif de transport (10).
